# EUROPÄISCHE PATENTSCHRIFT

(11) **EP 1 386 095 B1**
(45) Veröffentlichungstag und Bekanntmachung des Hinweises auf die Patenterteilung: **20.04.2005**
(21) Anmeldenummer: 01915615.7
(22) Anmeldetag: 29.03.2001
(51) Int. Cl.: F16H 1/48, B01F 15/00

(54) **PLANETENGETRIEBE ZUM ANTREIBEN EINER WELLE**
PLANETARY GEAR FOR DRIVING A SHAFT
ENGRENAGE PLANETAIRE SERVANT A ENTRAINER UN ARBRE

(43) Veröffentlichungstag der Anmeldung: 04.02.2004
(73) Patentinhaber: Ammann Aufbereitung AG, CH-4900 Langenthal (CH)
(72) Erfinder: GRÜNENFELDER, Hannis, CH-4900 Langenthal (CH); BURREN, Stefan, CH-4900 Langenthal (CH)
(74) Vertreter: Blum, Rudolf Emil Ernst
(86) Internationale Anmeldenummer: PCT/IB2001/000533
(87) Internationale Veröffentlichungsnummer: WO 2002/079668

(56) Entgegenhaltungen:
- DE-A- 2 029 950
- DE-A- 2 753 246
- FR-A- 2 284 072
- FR-A- 2 727 655

## Beschreibung

### TECHNISCHES GEBIET

Die Erfindung betrifft einen Zweiwellenzwangsmischer, ein Planetengetriebe zum Antreiben einer Welle, eine Anordnung mit solchen Planetengetrieben sowie eine Verwendung des Planetengetriebes oder der Anordnung gemäss den Oberbegriffen der unabhängigen Patentansprüche.

### STAND DER TECHNIK

Planetengetriebe zum Antreiben von Wellen kommen bevorzugterweise dort zum Einsatz, wo Wellen mit geringen Drehzahlen und hohen Antriebsdrehmomenten angetrieben werden müssen. Dies ist beispielsweise in der Bauindustrie der Fall, wo Mischer- oder Pumpenwellen typischerweise als Langsamläufer mit einer grossen Leistungsaufnahme ausgebildet sind.

FR 2 284 072 und DE 25 39 029, welche bezüglich Anspruch 3 als nächst Kommend anzusehen sind, offenbaren verschiedene Varianten eines Antriebsstrangs, bei dem ein Planetengetriebe als Kupplungselement zwischen einem Antriebsmotor und einer mit dem Motor anzutreibenden Pumpe angeordnet ist. Das Planetengetriebe wird dabei vom Antriebsmotor und der Pumpe getragen, wobei jeweils ein Antriebselement und ein Abtriebselement des Getriebes starr auf den Wellenstümpfen des Antriebsmotors und der Pumpe befestigt sind. Sowohl das Antriebselement als auch das Abtriebselement des Getriebes ist gegenüber dem Getriebegehäuse neigbar, so dass Fluchtungsfehler zwischen der Antriebsmotorwelle und der Pumpenwelle ausgeglichen werden können. Dieses wird konstruktiv dadurch ermöglicht, dass das Antriebselement und das Abtriebselement im Getriebegehäuse neigbar gelagert sind und jeweils mit einer getriebeinternen Antriebs- bzw. Abtriebswelle eine winkeltolerante Zahnkupplung bilden.

DE 27 53 246 offenbart ein Planetengetriebe zum Antreiben und zur Lagerung der Mischertrommel eines fahrbaren Betonmischers. Das Planetengetriebe weist ein Abtriebselement auf, welches mit einem Pendelrollenlager im Getriebegehäuse gelagert ist, derart, dass es sich gegenüber dem Gehäuse neigen kann, um eine etwaige sich durch Verwindung des Fahrgestells bei Fahrtbetrieb auf unebenem Untergrund ergebende Winkelabweichungen zu kompensieren. Die Übertragung des Drehmoments auf das neigbare Abtriebselement erfolgt über eine Zahnkupplung, welche dadurch gebildet wird, dass ein vom neigbaren Abtriebselement getragenes balliges Zahnrad in Zahnbahnen im getriebenen und gegenüber dem Getriebegehäuse nicht neigbaren Planetenradträger eingreift.

FR 2 727 655 offenbart einen Teil eines Fahrzeugantriebs mit Planetenuntersetzungsgetriebe. Während ein Antriebsritzel die Planetenräder treibt und von einer motorseitig gelagerten Welle getragen wird, ist der Rest des Planetengetriebes und insbesondere der als Abtriebselement dienende Planetenradträger unneigbar in einem Gehäuse gelagert, welches über weitere Verbindungselemente starr mit dem Motor verbunden ist. Um etwaige Ausrichtungsfehler infolge Fertigungs- und Montagetoleranzen zwischen Motor und Planetengetriebe kompensieren zu können, ist die das Antriebsritzel tragende Welle derartig ausgebildet und gelagert, dass sie sich elastisch verbiegen kann und so eine Auslenkung des Antriebsritzels zulässt.

Speziell zum synchronen Antreiben der Mischerwellen von Zweiwellenzwangsmischern zur Beton- und Asphaltherstellung kommen zunehmend Planetengetriebe zum Einsatz, da diese robust und kompakt sind und einen hohen Wirkungsgrad aufweisen. Für diese Art der Anwendung sind heute im Stand der Technik zwei Bauarten bekannt.

Bei der ersten Bauart sind die Planetengetriebe als Aufsteckgetriebe ausgestaltet, derart, dass diese auf die Wellenstümpfe der Mischerwellen aufgesteckt und von diesen getragen werden. In Drehrichtung stützen sich die Planetengetriebe über eine Drehmomentstütze am Mischergehäuse ab.

Bei der zweiten Bauart sind die Planetengetriebe mit ihren Gehäusen starr am Mischergehäuse befestigt und weisen Abtriebswellen auf, welche aus den Getriebegehäusen austreten und über biegeelastische Kupplungen mit den eigentlichen Mischerwellen verbunden sind.

DE 2 029 950 offenbart gemäß den Merkmalen im Oberbegriff von Anspruch 1 einen Zweiwellenzwangsmischer, dessen Mischerwellen von jeweils einem Planetengetriebe angetrieben werden und beidseitig mittels eigener Lager am Mischtrog gelagert sind. Die Planetengetriebe sind antriebsseitig durch eine quer zu den Drehachsen der Mischerwellen angeordnete,Welle mechanisch miteinander gekoppelt.

Bei den aus dem Stand der Technik bekannten Bauarten müssen die Mischerwellen separat gelagert werden, was speziell bei der beschriebenen Bauart mit Kupphingen zwischen den Mischerwellenenden und den Abtriebswellenenden der Planetengetriebe zu einem relativ grossem Platzbedarf führt. Die zuerst beschriebene Bauart weist zudem den entscheidenden Nachteil auf, dass die Position der Getriebegehäuse nicht fix ist, da sich die die Planetengetriebe tragenden Wellenenden im Betrieb infolge einer Durchbiegung der Wellen neigen, wodurch die bei Zweiwellenzwangsmischern erforderliche antriebsseitige Koppelung der Planetengetriebe problematisch ist.

### DARSTELLUNG DER ERFINDUNG

Es stellt sich daher die Aufgabe, einen Zweiwellenzwangsmischer, ein Planetengetriebe und eine Anordnung aus Planetengetrieben zur Verfügung zu stellen, welche den Stand der Technik weiterbilden.

Diese Aufgabe wird von dem Zweiwellenzwangsmischer, dem Planetengetriebe und der Anordnung mit den

Merkmalen der unabhängigen Patentansprüche gelöst. Weitere Ausgestaltungen sind in den abhängigen Ansprüchen aufgeführt.

Ein erster Aspekt der Erfindung betrifft einen Zweiwellenzwangsmischer zum Herstellen von Beton und/oder Asphalt. Die zwei Mischerwellen des Mischers sind in einem Mischtrog angeordnet, welcher den unteren Teil des Mischergehäuses bildet. Der Zweiwellenzwangsmischer weist des Weiteren zwei Planetengetriebe zum Antreiben der Mischerwellen auf. Die Planetengetriebe weisen jeweils ein Abtriebselement zur Ankoppelung an das Ende der anzutreibenden Mischerwelle auf, welches derartig im Getriebegehäuse gelagert ist, dass es gegenüber dem Getriebegehäuse neigbar ist zur Aufnahme von Lagetoleranzen zwischen dem anzutreibenden Wellenende und dem Planetengetriebe. Dabei sind die Mischerwellen an ihren Antriebsseiten in radialer oder in radialer und axialer Richtung ausschliesslich durch die Planetengetriebe gelagert und durch diese antreibbar.

In einer bevorzugten Ausführungsform des Zweiwellenzwangsmischers sind die Gehäuse der Planetengetriebe in wesentlichen starr mit dem Mischtrog verbunden, beispielsweise durch Verschraubung mit einer am Mischtrog angeschweissten Tragbrücke.

Ein derartiger Zweiwellenzwangsmischer weist einen einfachen Aufbau mit wenigen Bauteilen auf und ist zudem kostengünstig in der Herstellung, da die Anforderungen bei der Gehäusefertigung betreffend Form- und Lagetoleranzen äusserst gering sind.

Ein zweiter Aspekt der Erfindung betrifft ein Planetengetriebe zum Antreiben einer Welle, bevorzugterweise für einen Zweiwellenzwangsmischer gemäss dem ersten Aspekt der Erfindung. Das Planetengetriebe ist von einem Gehäuse umgeben und weist ein Abtriebselement zur Ankoppelung an ein Ende der anzutreibenden Welle auf, welches derartig innerhalb des Gehäuses gelagert ist, dass es um einige Zehntel Grad gegenüber dem Gehäuse neigbar ist, um Lagetoleranzen zwischen dem anzutreibenden Wellenende und dem Planetengetriebe aufzufangen. Dabei sind die Planetenräder des Planetengetriebes mit einem Abtriebsritzel verzahnt und das Abtriebsritzel ist starr mit dem Abtriebselement verbunden. Das Abtriebselement ist an seiner Abtriebsseite mit einer zylindrischen Öffnung zur Aufnahme des Wellenendes und/oder mit zusätzlichen Elementen, wie z.B. einer Spannhülse, versehen, so dass eine im wesentlichen biegestarre Befestigung des Abtriebselements am Wellenende möglich ist. Hierdurch wird ein unkomplizierter Aufbau mit wenigen Bauteilen realisiert und ein Planetengetriebe zum Antrieb von Wellen geschaffen, welches relativ grosse Lagetoleranzen zwischen dem Wellenende und dem Planetengetriebe zulässt und sich von daher besonders gut für Schweisskonstruktionen und für den Antrieb von langen Wellen eignet. Eine etwaige Neigung des Wellenendes gegenüber dem Getriebegehäuse infolge einer Durchbiegung der Welle und/oder durch Herstellungstoleranzen der Tragstruktur kann durch ein Neigen des Abtriebselements gegenüber dem Getriebegehäuse aufgefangen werden, weshalb die bei starr befestigten Planetengetrieben sonst üblichen Kupplungen zwischen Welle und Getriebe entfallen können. Hierdurch wird beispielsweise der Bau von kostengünstigen und äusserst kompakten Zweiwellenzwangsmischern ermöglicht.

In einer bevorzugten Ausführung der Erfindung sind das Abtriebsritzel und das Abtriebselement von einem einstückig ausgebildeten Bauteil gebildet.

In einer weiteren bevorzugten Ausführung des Planetengetriebes ist das Abtriebselement in radialer Richtung in genau einem Wälzlager im Getriebegehäuse gelagert, wobei mit Vorteil ein Pendelrollenlager zum Einsatz kommt, welches sich besonders gut für einen derartigen Einsatzzweck eignet.

Wird das Abtriebselement zudem derartig ausgestaltet, dass das Ende des anzutreibenden Wellenendes im Bereich der axialen Erstreckung des Wälzlagers zu liegen kommt, so resultiert eine geringe radiale Auslenkung des axial über das Wellenende hinausragenden Teils des Abtriebselements infolge einer Durchbiegung der Welle. Dieses ist wichtig, da diese radiale Auslenkung notwendigerweise an anderer Stelle, z.B. in der Verzahnung zwischen Abtriebsritzel und den Planetenrädern, aufgefangen werden muss. Auch ergibt sich eine äussert stabile Lagerungsanordnung, was speziell dann von Vorteil ist, wenn das Planetengetriebe als kombinierte Antriebs- und Lagerungseinheit für langsamdrehende Wellen mit grossen Antriebsdrehmomenten verwendet wird.

Bevorzugterweise weist das Getriebegehäuse Befestigungsmittel zur bevorzugterweise starren Befestigung desselben an einer Tragstruktur, z.B. am Gehäuse eines Zweiwellenzwangsmischers, auf. Die Befestigungsmittel sind bevorzugterweise als Befestigungsflansch, mit oder ohne radialer Zentrierschulter oder als ein oder mehrere Befestigungsfüsse ausgebildet, da sich hierdurch eine einfache und in axialer wie in radialer Richtung sichere Befestigungsmöglichkeit an der Tragstruktur ergibt.

Soll das Planetengetriebe sowohl zum Antreiben als auch zum Lagern des Endes einer Welle verwendet werden, so ist es bevorzugt, dass alle tragenden Komponenten des Getriebes, speziell das Getriebegehäuse inklusive etwaiger Befestigungsmittel desselben, die Lagerung des Abtriebselements und das Abtriebselement selbst so dimensioniert sind, dass sie nicht nur die bei maximaler Getriebebelastung auftretenden Kräfte dauerhaft ertragen können, sondern zusätzlich auch die durch die Wellenlagerung resultierenden Kräfte, welche ein Mehrfaches der zuvor erwähnten Kräfte ausmachen können.

In einer anderen bevorzugten Ausführungsform der Erfindung weist dass Planetengetriebe ein Antriebselement, z.B. eine Welle zum Antreiben des Getriebes mit einem Elektromotor, auf, dessen Drehachse senkrecht zu der Drehachse des Abtriebselements bei gegenüber dem Getriebegehäuse ungeneigtem Zustand ist. Eine derartige bauliche Ausführung ermöglicht den Bau von besonders kompakten und kurzbauenden Maschinen mit Planetengetrieben und eine einfache antriebsseitige Koppelung mehrerer, bevorzugterweise parallele Wellen antreibender Planetengetriebe.

In noch einer weiteren bevorzugten Ausführungsform der Erfindung ist das Gehäuse des Planetengetriebes derartig aufgebaut, dass das Abtriebselement mit seiner Lagerung in einer vom übrigen Getriebegehäuse trennbaren Abtriebsglocke angeordnet ist, wobei es bevorzugt ist, dass diese Abtriebsglocke über eigene Befestigungsmittel zur starren Befestigung derselben an einer Tragstruktur verfügt, welche bevorzugterweise wie bereits zuvor beschrieben ausgestaltet sind. Wird das Planetengetriebe als kombinierte Antriebs- und Lagereinheit verwendet, ergibt sich hieraus der Vorteil, dass das Getriebe geöffnet und der Hauptgetriebeteil entfernt werden kann, ohne die Lagerung und Ausrichtung des Wellenendes zu beeinträchtigen bzw. aufzuheben.

In einem dritten Aspekt der Erfindung umfasst die Anordnung zwei oder mehr Planetengetriebe gemäss dem zweiten Aspekt der Erfindung, deren Gehäuse direkt oder über eine Tragstruktur, an der die Planetengetriebe befestigt sind, im wesentlichen starr miteinander verbunden sind, derartig, dass sie sowohl bei Nichtbetrieb als auch im Betrieb eine stabile und definierte Lage zueinander aufweisen. Hierdurch ergibt sich die Möglichkeit, die Getriebe auf einfache Weise antriebsseitig mechanisch miteinander zu koppeln und dadurch eine weitere bevorzugte Ausführungsform der Anordnung zu schaffen, die eine wellenbiegungstolerante Lagerung und einen synchronen Antrieb mehrerer langer Wellen ermöglicht.

In noch einer bevorzugten Ausführungsform der Anordnung sind die Planetengetriebe derartig angeordnet, dass die Drehachsen ihrer Abtriebselemente parallel sind. Bei solchen Anordnungen treten die Vorteile der Erfindung besonders deutlich zu Tage.

Ein letzter Aspekt der Erfindung betrifft die Verwendung des Planetengetriebes gemäss dem zweiten Aspekt der Erfindung oder der Anordnung gemäss dem dritten Aspekt der Erfindung als kombinierte Antriebs- und Lagereinheit für Wellen, wobei eine Verwendung für langsamdrehende lange Wellen, vorzugsweise mit grossen Wellenantriebsdrehmomenten, bevorzugt ist. Unter "langen Wellen" werden hier Wellen verstanden, bei denen das Verhältnis zwischen der freien Länge zwischen den Lagerstellen und dem Wellendurchmesser grösser ist als 10:1.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine Draufsicht auf das antriebsseitige Ende eines erfindungsgemässen Zweiwellenzwangsmischers mit zwei erfindungsgemässen Planetengetrieben;
Figur 2 eine Schnittdarstellung durch die Abtriebsglocke eines Planetengetriebes des Zweiwellenzwangsmischers aus Fig. 1.

### WEGE ZUR AUSFÜHRUNG DER ERFINDUNG

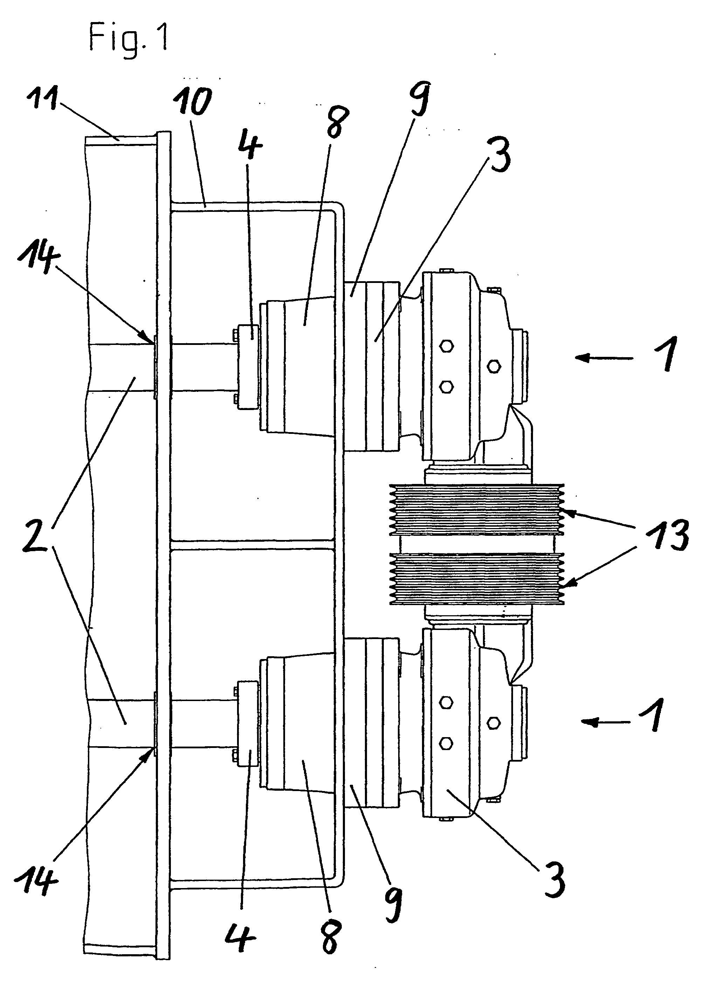

Fig. 1 zeigt eine Draufsicht auf das antriebsseitige Ende eines erfindungsgemässen Zweiwellenzwangsmischers bei geöffnetem Mischertrog 11. Wie zu erkennen ist, weist der Mischer zwei erfindungsgemässe Planetengetriebe 1 angeordnet an den Enden seiner zwei parallelen Mischerwellen 2 auf. Die Getriebe 1 sind jeweils mit einem Befestigungsflansch 9 starr an einer gemeinsamen Tragbrücke 10 befestigt. Die Tragbrücke 10 ist an dem, das Unterteil des Zweiwellenzwangsmischers bildenden Mischertrog 11 angeschweisst, welcher als Schweisskonstruktion ausgeführt ist.

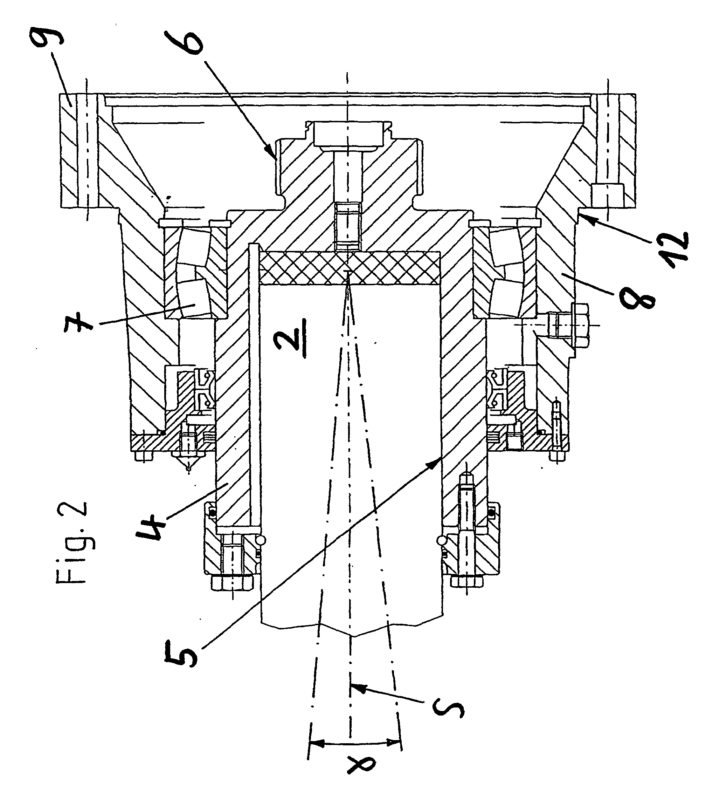

Wie aus Fig. 1 in Zusammenschau mit Fig. 2 hervorgeht, welche eine Schnittdarstellung durch den abtriebsseitigen Teil eines der Planetengetriebe 1 aus Fig. 1 zeigt, ist dieser abtriebsseitige Getriebeteil 8 als eine vom übrigen Getriebe trennbare Abtriebsglocke 8 ausgebildet, welche den abtriebsseitigen Gehäuseteil mit dem Befestigungsflansch 9 und, darin mit einem Pendelrollenlager 7 neigbar gegenüber dem Gehäuse 3, 8 gelagert, das Abtriebselement 4 umfasst. Wie in Fig. 2 infolge einer übertriebenen Darstellungsweise der Auslenkungen der Mittellinien der Welle 2 (als strichpunktierte Linien dargestellt) bei maximaler Neigung des Wellenendes gegenüber dem Getriebegehäuse 3, 8 deutlich zu erkennen ist, ist das Wellenende 2, ausgehend von einer Solllage S seiner Mittellinie, in alle Richtungen um den halben Gesamtneigungswinkel α neigbar. Der Drehpunkt dieser Neigung ist im vorliegenden Fall das Zentrum des Pendelrollenlagers 7. Der mögliche Gesamtneigungswinkel α beträgt mindestens 0.2°, bevorzugterweise mindestens 0.4°. Das Abtriebselement 4 weist eine zylindrische Bohrung 5 mit Passfedernut auf, in welcher die anzutreibende Mischerwelle 2 im wesentlichen spielfrei angeordnet ist, derart, dass das Abtriebselement 4 biegestarr mit dem Mischerwellenende 2 verbunden ist. Gegen Verdrehen gegenüber dem Abtriebselement 4 ist die Mischerwelle 2 formschlüssig mit einer Passfeder gesichert. Wie des Weiteren zu erkennen ist, sind die Mischerwelle 2 und das Pendelrollenlager 7 im dargestellten Fall derartig zueinander positioniert, dass die axiale Position des Endes des dargestellten Wellenendes 2 sich im Bereich der axialen Erstreckung des Pendelrollenlagers 7 befindet. Ebenfalls ersichtlich ist in dieser Darstellung, dass das Abtriebselement 4 einstückig mit dem Abtriebsritzel 6 des Planetengetriebes 1 ausgebildet ist, so dass dieses bei einem Trennen der Abtriebsglocke 8 vom Hauptgetriebeteil an der Abtriebsglocke 8 verbleibt. Wie aus Fig. 2 in Kombination mit Fig. 1 weiter zu entnehmen ist, sind die Mischerwellen 2 an ihren dargestellten Enden 2 ausschliesslich in den Planetengetrieben 1 gelagert, so dass die Planetengetriebe 1 als kombinierte Lager- und Abtriebseinheiten dienen, welche gleichzeitig die Ausrichtung der Wellen 2 im Mischertrog 11 bestimmen. Die Durchtritte der Mischerwellen 2 durch die Stirnwand des Mischertrogs 11 sind lediglich mit Dichtungselementen 14 gegen einen Austritt von Mischgut aus dem Mischtrog 11 nach aussen hin abgedichtet. Diese Dichtelemente 14 werden nach Einbau der Mischerwellen 2 entsprechend der Lage der jeweiligen Mischerwelle 2 ausgerichtet. Da bei Zweiwellenzwangsmischern der Ausrichtung der Mischerwellen 2 zueinander und zu den Mischertrogwandungen eine wichtige Rolle für ein einwandfreies Funktionieren des Mischers zukommt, und im dargestellten Fall die Lage der Mischerwellen 2 durch die Lage der diese lagernden Planetengetriebe 1 bestimmt wird, weist die Tragbrücke 10 zwei zueinander und zu den Mischertrogwandungen ausgerichtete Zentrierbohrungen auf, mit Hilfe derer die Getriebegehäuse 3 jeweils mittels einer sich an ihrem Befestigungsflansch 9 befindlichen radialen Zentrierschulter 12 genau positioniert werden.

Wie in Fig. 1 erkennbar ist, weisen beide Planetengetriebe 1 eine unter einem rechten Winkel zur Drehachse ihres Abtriebselements 4 bzw. der von ihnen anzutreibenden Mischerwelle 2 aus dem Getriebegehäuse 3 austretende Antriebswelle auf, an deren Ende eine Riemenscheibe 13 zum Antrieb des Planetengetriebes 1 mittels mehrerer Keilriemen angeordnet ist. Die Austrittsseiten an den Planetengetrieben 1 sind spiegelbildlich und die Austrittspositionen wurden derart gewählt, dass die Antriebswellen im wesentlichen eine gemeinsame Achse aufweisen und sich die beiden Riemenscheiben 13, welche im vorliegenden Fall die zwei Hälften einer Kupplung bilden, direkt gegenüberstehen. Auf diese Weise lässt sich eine kostengünstige mechanische Koppelung der Antriebsseiten beider Planetengetriebe 1 erzielen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der nun folgenden Ansprüche ausgeführt werden kann.

## Patentansprüche

1. Zweiwellenzwangsmischer für die Herstellung von Beton und/oder Asphalt, mit zwei in einem Mischtrog (11) angeordneten Mischerwellen (2) und mit zwei Planetengetrieben (1) zum Antreiben der Mischerwellen (2), wobei die Planetengetriebe (1) jeweils ein in einem Getriebegehäuse (3) gelagertes Abtriebselement (4) zur Ankoppelung an das Ende der anzutreibenden Mischerwelle (2) aufweisen, **dadurch gekennzeichnet, dass** das Abtriebselement (4) derartig im Getriebegehäuse (3) gelagert ist, dass es gegenüber dem Getriebegehäuse (3) neigbar ist zur Aufnahme von Lagetoleranzen zwischen dem Wellenende und dem Planetengetriebe (1), und wobei die Mischerwellen (2) auf ihren Antriebsseiten radial ausschliesslich durch die Planetengetriebe (1) gelagert sind.

2. Zweiwellenzwangsmischer nach Anspruch 1, **dadurch gekennzeichnet, dass** die Gehäuse (3) der Planetengetriebe (1) im wesentlichen starr mit dem Mischtrog (11) verbunden sind.

3. Planetengetriebe zum Antreiben einer Welle (2), insbesondere für einen Zweiwellenzwangsmischer nach einem der vorangehenden Ansprüche, mit einem Getriebegehäuse (3) und einem im Getriebegehäuse (3) gelagerten Abtriebselement (4) zur Ankoppelung an ein Ende der anzutreibenden Welle (2), wobei das Abtriebselement (4) derartig im Getriebegehäuse (3) gelagert ist, dass es gegenüber dem Getriebegehäuse (3) neigbar ist zur Aufnahme von Lagetoleranzen zwischen dem Wellenende und dem Planetengetriebe, und wobei die Planetenräder des Planetengetriebes mit einem Abtriebsritzel (6) verzahnt sind, **dadurch gekennzeichnet, dass** das Abtriebsritzel (6) starr mit dem Abtriebselement (4) verbunden ist und daß das Abtriebselement (4) ausgestaltet ist zur starren Ankoppelung an das Ende der anzutreibenden Welle (2), wobei das Abtriebselement (4) eine im wesentlichen zylindrische Öffnung (5) aufweist zur Aufnahme des Wellenendes.

4. Planetengetriebe nach Anspruch 3, **dadurch gekennzeichnet, dass** das Abtriebselement (4) einstückig mit dem Abtriebszahnrad (6) ausgebildet ist.

5. Planetengetriebe nach einem der Ansprüche 3 bis 4, **dadurch gekennzeichnet, dass** das Abtriebselement (4) radial mit genau einem Wälzlager (7), insbesondere mit genau einem Pendelrollenlager (7), gelagert ist, und insbesondere, dass das Abtriebselement (4) derartig ausgestaltet ist, dass das Ende der Welle (2) in axialer Richtung im Bereich der axialen Erstreckung des Wälzlagers (7) positionierbar ist.

6. Planetengetriebe nach einem der Ansprüche 3 bis 5, **dadurch gekennzeichnet, dass** das Getriebegehäuse (3) Befestigungsmittel (9), insbesondere einen Befestigungsflansch (9) und/oder einen oder mehrere Befestigungsfüsse zur insbesondere starren Befestigung des Getriebegehäuses (3) an einer Tragstruktur (10, 11), aufweist.

7. Planetengetriebe nach einem der Ansprüche 3 bis 6, **dadurch gekennzeichnet, dass** das Getriebegehäuse (3), die Lagerung (7) des Abtriebselements (4) im Getriebegehäuse (3) und das Abtriebselement (4) derartig dimensioniert sind, dass diese ein Mehrfaches der bei maximaler Getriebebelastung auftretenden Kräfte ertragen können zur Ermöglichung einer Verwendung des Planetengetriebes (1) als kombinierte Antriebs- und Lagerungseinheit.

8. Planetengetriebe nach einem der Ansprüche 3 bis 7, **dadurch gekennzeichnet, dass** das Planetengetriebe (1) ein Antriebselement aufweist, welches derartig im Getriebegehäuse (3) gelagert ist, dass dessen Drehachse im wesentlichen senkrecht zu der Drehachse des Abtriebselements (4) verläuft.

9. Planetengetriebe nach einem der Ansprüche 3 bis 8, **dadurch gekennzeichnet, dass** das Getriebegehäuse (3) derartig ausgestaltet ist, dass der das Abtriebselement (4) in sich lagernde Gehäuseteil als eine vom übrigen Getriebe trennbare Abtriebsglocke (8) ausgestaltet ist, und insbesondere, dass diese Abtriebsglocke (8) Befestigungsmittel (9), insbesondere einen Befestigungsflansch (9) und/oder einen oder mehrere Befestigungsfüsse zur insbesondere starren Befestigung an einer Tragstruktur (10) aufweist.

10. Anordnung aus mindestens zwei Planetengetrieben (1) nach einem der Ansprüche 3 bis 9, wobei die Getriebegehäuse (3) der Planetengetriebe (1) starr miteinander verbundenen sind, und insbesondere, wobei die Planetengetriebe zudem antriebsseitig mechanisch miteinander gekoppelt sind.

11. Anordnung nach Anspruch 10, **dadurch gekennzeichnet, dass** die Planetengetriebe (1) derartig zueinander orientiert sind, dass die Drehachsen ihrer Abtriebselemente (4) parallel verlaufen.

12. Verwendung des Planetengetriebes (1) oder der Anordnung nach einem der Ansprüche 3 bis 11 als kombinierte Antriebs- und Lagerungseinheit für Wellen (2), insbesondere für langsamdrehende lange Wellen (2), insbesondere mit grossen Antriebsdrehmomenten.

## Claims

1. Two shaft compulsory mixer for the production of concrete and/or asphalt, with two mixer shafts (2) arranged in a mixing trough (11) and with two planetary gears (1) for driving the mixer shafts (2), wherein the planetary gears (1) in each case comprise a power take-off element (4) for the connection to the end of the mixer shaft (2) to be driven, which is rotatably supported in a gear housing (3), **characterised in that** the power take-off element (4) is rotatably supported in such a manner in the gear housing (3) that it is inclinable relative to the gear housing (3) for the assimilation of positional tolerances between the end of the shaft and the planetary gear (1), and wherein the mixer shafts (2) at their drive sides in radial direction are solely supported by the planetary gears (1).

2. Two shaft compulsory mixer according to claim 1, **characterised in that** the housings (3) of the planetary gears (1) are substantially rigidly connected to the mixing trough (11).

3. Planetary gear for driving a shaft (2), in particular for a two shaft compulsory mixer according to one of the preceding claims, with a gear housing (3) and a power take-off element (4) for the connection to one end of the shaft (2) to be driven, which is rotatably supported in the gear housing (3), wherein the power take-off element (4) is rotatably supported in such a manner in the gear housing (3) that it is inclinable relative to the gear housing (3) for the assimilation of positional tolerances between the end of the shaft and the planetary gear, and wherein the planet wheels of the planetary gear are geared with a power take-off pinion (6), **characterised in that** the power take-off pinion (6) is rigidly interconnected with the power take-off element (4) and that the power take-off element (4) is adapted for being rigidly connected to the end of the shaft (2) to be driven, wherein the power take-off element (4) comprises a substantially cylindrical opening (5) for receiving the end of the shaft.

4. Planetary gear according to claim 3, **characterised in that** the power take-off element (4) is designed as a one-piece element together with the power take-off gearwheel (6).

5. Planetary gear according to one of the claims 3 to 4, **characterised in that** the power take-off element (4) in radial direction is supported by exactly one roller bearing (7), in particular by exactly one swivel-joint roller bearing (7), and in particular, that the power take-off element (4) is designed in such a manner that the end of the shaft (2) in axial direction can be positioned in the area of the axial extension of the roller bearing (7).

6. Planetary gear according to one of the claims 3 to 5, **characterised in that** the gear housing (3) comprises fastening means (9), in particular a fastening flange (9) and/or one or several fastening feet for the in particular rigid fastening of the gear housing (3) at a support structure (10, 11).

7. Planetary gear according to one of the claims 3 to 6, **characterised in that** the gear housing (3), the bearing arrangement (7) of the power take-off element (4) in the gear housing (3) and the power take-off element (4) are dimensioned in such a manner that they are in position to withstand a multiple of the forces which occur when the gear is operated at maximum load, for enabling the use of the planetary gear (1) as combined driving and bearing unit.

8. Planetary gear according to one of the claims 3 to 7, **characterised in that** the planetary gear (1) comprises a drive element, which is rotatably supported in the gear housing (3) in such a manner, that its rotation axis is substantially perpendicular to the rotation axis of the power take-off element (4).

9. Planetary gear according to one of the claims 3 to 8, **characterised in that** the gear housing (3) is designed in such a manner that the part of the housing, which in its inside is rotatably supporting the power take-off element (4), is designed as a power take-off bell housing (8) which is separable from the rest of the gear, and in particular, that this power take-off bell housing (8) comprises fastening means (9), in particular a fastening flange (9) and/or one or several fastening feet for an in particular rigid fastening at a support structure (10).

10. Arrangement of at least two planetary gears (1) according to one of the claims 3 to 9, wherein the gear housings (3) of the planetary gears (1) are rigidly interconnected with each other, and in particular, wherein the planetary gears are furthermore at the drive side mechanically coupled with each other.

11. Arrangement according to claim 10, **characterised in that** the planetary gears (1) are oriented relative to each other in such a manner that the rotation axis of their power take-off elements (4) are parallel.

12. Use of the planetary gear (1) or of the arrangement according to one of the claims 3 to 11 as combined drive and bearing unit for shafts (2), in particular for slowly turning long shafts (2), in particular with large driving torques.

## Revendications

1. Malaxeur à mélange forcé à double arbre pour la fabrication de béton et/ou d'asphalte, avec deux arbres de malaxeurs (2) disposés dans un bac de mélange (11) et avec deux engrenages planétaires (1) pour entraîner les arbres de malaxeurs (2), moyennant quoi les engrenages planétaires (1) comprennent chacun un élément de sortie (4) logé dans un carter d'engrenage (3) pour un couplage à l'extrémité de l'arbre de malaxeur (2) à entraîner, **caractérisé en ce que** l'élément de sortie (4) est logé dans le carter d'engrenage (3) de telle sorte qu'il soit inclinable par rapport au carter d'engrenage (3) pour compenser des tolérances de position entre l'extrémité de l'arbre et l'engrenage planétaire (1) et moyennant quoi les arbres de malaxeur (2) sont logés radialement, du côté de l'entraînement, exclusivement par l'engrenage planétaire (1).

2. Malaxeur à mélange forcé à double arbre selon la revendication 1, **caractérisé en ce que** les carters (3) de l'engrenage planétaire (1) sont reliés de manière rigide avec le bac de mélange (11).

3. Engrenage planétaire pour entraîner un arbre (2), notamment pour un malaxeur à mélange forcé à double arbre selon l'une des revendications précédentes, avec un carter d'engrenage (3) et un élément de sortie (4) logé dans le carter d'engrenage (3) pour le couplage à une extrémité de l'arbre à entraîner (2), moyennant quoi l'élément de sortie (4) est logé dans le carter de l'engrenage (3) de telle sorte qu'il soit inclinable par rapport au carter d'engrenage (3) pour compenser des tolérances de position entre l'extrémité de l'arbre et l'engrenage planétaire et moyennant quoi les roues planétaires de l'engrenage planétaire sont engrenées avec un pignon de sortie (6), **caractérisé en ce que** le pignon de sortie (6) est relié de manière rigide avec l'élément de sortie (4) et **en ce que** l'élément de sortie (4) est conçu pour être couplé à l'extrémité de l'arbre à entraîner (2), moyennant quoi l'élément de sortie (4) comprend une ouverture cylindrique (5) pour loger l'extrémité de l'arbre.

4. Engrenage planétaire selon la revendication 3, **caractérisé en ce que** l'élément de sortie (4) est conçu d'une seule pièce avec la roue dentée de sortie (6).

5. Engrenage planétaire selon l'une des revendications 3 à 4, **caractérisé en ce que** l'élément de sortie (4) est logé radialement avec exactement un palier à roulement (7), plus particulièrement avec exactement un palier à rotule (7) et plus particulièrement **en ce que** l'élément de sortie (4) est conçu de telle sorte que l'extrémité de l'arbre (2) puisse être positionnée dans le sens axial au niveau de l'extension axiale du palier à roulement (7).

6. Engrenage planétaire selon l'une des revendications 3 à 5, **caractérisé en ce que** le carter d'engrenage (3) comprend des moyens de fixation (9), plus particulièrement une bride de fixation (9) et/ou un ou plusieurs montants de fixation notamment pour la fixation rigide du carter d'engrenage (3) sur une structure porteuse (10, 11).

7. Engrenage planétaire selon l'une des revendications 3 à 6, **caractérisé en ce que** le carter d'engrenage (3), le logement (7) de l'élément de sortie (4) dans le carter d'engrenage (3) et l'élément de sortie (4) sont dimensionnés de telle sorte qu'ils puissent supporter plusieurs fois les forces qui apparaissent lors de la sollicitation maximale de l'engrenage afin de permettre l'utilisation de l'engrenage planétaire (1) comme une unité combinée d'entraînement et de logement.

8. Engrenage planétaire selon l'une des revendications 3 à 7, **caractérisé en ce que** l'engrenage planétaire (1) comprend un élément d'entrée qui est logé dans le carter d'engrenage (3) de telle sorte que son axe de rotation soit sensiblement perpendiculaire à l'axe de rotation de l'élément de sortie (4).

9. Engrenage planétaire selon l'une des revendications 3 à 8, **caractérisé en ce que** le carter d'engrenage (3) est conçu de telle sorte que l'élément de sortie (4) soit conçu comme une calotte de sortie (8) et plus particulièrement **en ce que** cette calotte de sortie (8) comprend des moyens de fixation (9), plus particulièrement une bride de fixation (9) et/ou un ou plusieurs montants de fixation pour la fixation rigide à une structure porteuse (10).

10. Dispositif constitué d'au moins deux engrenages planétaires (1) selon l'une des revendications 3 à 9, moyennant quoi les carters d'engrenages (3) des engrenages planétaires (1) sont reliés entre eux de manière rigide et plus particulièrement, moyennant quoi les engrenages planétaires sont, en outre, couplés mécaniquement entre eux du côté de l'entraînement.

11. Dispositif selon la revendication 10, **caractérisé en ce que** les engrenages planétaires (1) peuvent être orientés l'un par rapport à l'autre de telle sorte que les axes de rotation de leurs éléments de sortie (4) soient parallèles.

12. Utilisation de l'engrenage planétaire (1) ou du dispositif selon l'une des revendications 3 à 11 en tant qu'unité combinée d'entraînement et de logement pour des arbres (2), plus particulièrement pour des arbres (2) longs et à rotation lente, plus particulièrement avec des couples d'entraînement élevés.
